# EUROPÄISCHE PATENTSCHRIFT

(11) **EP 3 640 507 B1**
(45) Veröffentlichungstag und Bekanntmachung des Hinweises auf die Patenterteilung: **09.03.2022**
(21) Anmeldenummer: 18212870.2
(22) Anmeldetag: 17.12.2018
(51) Int. Cl.: F16J 15/34

(54) **GLEITRINGDICHTUNGSVORRICHTUNG MIT MIKROSYSTEM, PUMPVORRICHTUNG HIERMIT UND VERFAHREN ZU DEREN BETRIEB**
SLIDE RING SEAL DEVICE WITH MICROSYSTEM, PUMP DEVICE WITH SAME AND METHOD FOR ITS OPERATION
DISPOSITIF DE BAGUE D'ÉTANCHÉITÉ GLISSANTE POURVU DE MICROSYSTÈME, DISPOSITIF DE POMPAGE CORRESPONDANT ET SON PROCÉDÉ DE FONCTIONNEMENT

(30) Priorität: 18.10.2018 DE 102018125969
(43) Veröffentlichungstag der Anmeldung: 22.04.2020
(73) Patentinhaber: Herborner Pumpentechnik GmbH & Co KG, 35745 Herborn (DE)
(72) Erfinder: Korupp, Sascha, 35614 Aßlar-Werdorf (DE); Schneider, Florian, 35745 Herborn (DE); Runte, Lars, 35684 Dillenburg-Frohnhausen (DE); Reeh, Nils, 35745 Herborn (DE)
(74) Vertreter: Patentanwälte Olbricht Buchhold Keulertz

(56) Entgegenhaltungen:
- EP-A2- 2 362 122
- GB-A- 2 395 532
- US-A1- 2017 219 152

## Beschreibung

Die Erfindung betrifft eine Pumpenvorrichtung mit einer Gleitringdichtungsvorrichtung gemäß Anspruch 1 und ein Verfahren zu deren Betrieb nach Anspruch 12.

Gleitringdichtungen oder auch sogenannte dynamische Dichtungen übernehmen die Abdichtung rotierender Wellen gegenüber einer Wand, z. B. eines Maschinengehäuses oder eines Pumpengehäuses. Hauptkomponenten sind zwei aufeinander gleitende Bauteile, nämlich ein Gleitring und ein Gegenring. Oftmals ist der Gleitring oder der Gegenring federnd in Richtung der anderen Hauptkomponente beaufschlagt. Einer der beiden Ringe sitzt starr im stationären Gehäuse. Der andere der beiden Ringe ist gegen Verdrehung gesichert auf der rotierenden Welle befestigt und dreht sich also mit der Welle mit. Eine Kontaktfläche zwischen den beiden Ringen bildet die Dichtzone aus.

Nachteilhaft ist im Stand der Technik, dass diese Gleitringdichtungen unter bestimmten Betriebsbedingungen, insbesondere bei Trockenlauf der Pumpen, heiß werden, insbesondere die verwendeten Elastomere thermisch überlasten, verschleißen und im schlimmsten Falle in kürzester Zeit ausfallen. Spätestens bei einer nachlassenden Dichtwirkung ist eine aufwendige Instandsetzung notwendig.

Aus EP 2 362 122 A2 ist eine Pumpenvorrichtung mit einer Gleitringdichtungsanordnung bekannt, die mittels einer Sensorik eine Fördereinrichtung ansteuert, mit der der Gleitringdichtungsanordnung bei Bedarf ein Schmiermittel zugeführt wird. Dabei sitzt ein Sensor in oder an der Gleitringdichtungsanordnung.

US 2017/219152 A1 offenbart eine Gleitringdichtungsvorrichtung mit einer Gleitringdichtung, die eine Trockenlaufschutzeinrichtung aufweist., Die Trockenlaufschutzeinrichtung weist wenigstens ein Mikrosystem auf, das benachbart zur Gleitringdichtung angeordnet und einen digitalen Messwert ausgibt.

Des Weiteren sind aus GB 2 395 532 A allgemein Mikrosysteme bekannt, die einen MEMS-Chip aufweisen.

Aufgabe der Erfindung ist es, die Voraussetzzungen dafür zu schaffen, dass die Betriebssicherheit und Lebensdauer einer solchen Gleitringdichtung hoch sind, wobei die Lösung zuverlässig, einfach in der Handhabung, kompakt und preiswert sein soll.

Hauptmerkmale der Erfindung sind in den Ansprüchen 1 und 12 angegeben. Ausgestaltungen sind Gegenstand der Ansprüche 2 bis 10 und 13 sowie der Beschreibung.

Die Erfindung betrifft außerdem eine Pumpenvorrichtung mit einem Pumpengehäuse, in dem ein Wellendurchgang ausgebildet ist, mit einer Pumpenwelle, die drehbar in den Wellendurchgang ragt oder drehbar in dem Wellendurchgang gelagert ist, und mit einer Gleitringdichtungsvorrichtung. Die Gleitringdichtungsvorrichtung (auch allgemein als Vorrichtung bezeichenbar) weist eine Gleitringdichtung und eine Trockenlaufschutzeinrichtung auf, wobei die Trockenlaufschutzeinrichtung wenigstens ein Mikrosystem aufweist, das einen digitalen Messwert ausgibt, wobei das Mikrosystem benachbart zur Gleitringdichtung und/oder an und/oder in der Gleitringdichtung angeordnet ist. Die Gleitringdichtung ist im Wellendurchgang angeordnet und sitzt auf der Pumpenwelle.

Des Weiteren korreliert die Drehzahl eines Antriebsmotors der Pumpenwelle mit dem digitalen Messwert des Mikrosystems. Dies lässt sich so einrichten, dass ein Normalbetrieb bei Vorliegen von als unkritisch definierten Messwerten erfolgt, und ein Notlauf bei als kritisch definierten Messwerten aktiv wird.

Insbesondere in Pumpen werden Gleitringdichtungen mit dem zu pumpenden Medium geschmiert und gekühlt. Die sich ändernden Betriebszustände der Pumpe und des zu pumpenden Mediums wirken sich daher auf die Temperatur und Dichtigkeit der Gleitringdichtung aus. Insofern kommt der Überwachung der Gleitringdichtung eine erhöhte Bedeutung zu, und die Pumpenvorrichtung kann vor Ausfällen bedingt durch Schäden der Gleitringdichtung geschützt werden. Vorzugsweise handelt es sich bei der Pumpe um eine Kreiselpumpe. Solche arbeiten mit hohen Drehzahlen, sodass dem Trockenlaufschutz wie er mit der Trockenlaufschutzeinrichtung erzielt wird, eine hohe Bedeutung zukommt.

Mit Hilfe des digitalen Messwerts lassen sich Betriebszustände der Gleitringdichtung einfach erfassen und verwerten, wodurch die Gleitringdichtung in unkritischen Betriebszuständen gehalten werden kann. Das erhöht deren Lebensdauer. Der Einsatz eines Mikrosystems benötigt nur einen geringen Bauraum und ist außerdem preiswert. Das Nutzen digitaler Messwerte erleichtert zudem die Anbindung an digitale Steuer- und Regeleinheiten, denn ein digitaler Messwert kann ohne Umwandlung verwertet werden.

In einer bevorzugten Ausgestaltung weist das Mikrosystem einen MEMS-Chip auf. MEMS-Chips (microelectromechanical systems bzw. micromachines) sind winzige Bauelemente, die Logikelemente und/oder mikromechanische Strukturen in einem Chip vereinen. Sie können mechanische und/oder elektrische Informationen verarbeiten. Vorzugsweise haben die mikromechanischen Strukturen eine Baugröße von wenigen Millimetern, insbesondere von maximal 5 Millimetern und bevorzugt von maximal 3 Millimetern. Dank der Miniaturisierung lassen sie sich preiswert und in Massen fertigen. Ein solcher MEMS-Chip kann beispielsweise auf einer Platine, insbesondere einer Leiterplatine, angeordnet sein. Vorzugsweise weist der MEMS-Chip einen Sensor zu Bestimmung eines Messwertes und weiter bevorzugt wenigstens zwei unterschiedliche Sensoren zur Bestimmung von zwei unterschiedlichen Messwerten auf. Messfehler durch analoge Signalweiterleitungen können hierdurch vermieden werden.

Gemäß einer optionalen Ausführungsform weist das Mikrosystem einen Temperatursensor auf und der digitale Messwert ist ein Temperaturwert. Hierdurch lassen sich Überhitzungen der Gleitringdichtung rechtzeitig feststellen, die Schäden regelmäßig vorausgehen. Hierdurch kann frühzeitig durch Anpassung von Betriebsparametern reagiert werden, um einen temperaturbedingten Schaden der Gleitringdichtung abzuwenden. Durch die Nähe der Gleitringdichtung zum maßgeblichen Dichtspalt und der meist sehr guten Wärmeleitfähigkeit von dessen Material kann deren Temperatur mit hoher zeitlicher Auflösung erfasst werden.

In einer speziellen Variante ist der Temperatursensor ein optischer Sensor. Ein solcher kann die Temperatur optisch erfassen, dies insbesondere kontaktlos zum Messpunkt, und im Besonderen kontaktlos zu einem Messpunkt an der Gleitringdichtung. Ein solcher optischer Temperatursensor könnte in einer beispielhaft als Einbauort vorgesehenen Pumpe in bzw. an deren Pumpenrückwand platziert werden. Von dieser Position ließe sich die Temperatur einer in bzw. an der Pumpenrückwand angeordneten Gleitringdichtung bestimmen. Besonders bevorzugt ist der optische Temperatursensor Teil eines MEMS-Chips.

Das Mikrosystem kann einem Gleitring oder einem Gegenring der Gleitringdichtung zugeordnet sein. Vorzugsweise ist das Mikrosystem dem statischen Ring aus der Gruppe des Gleitrings und des Gegenrings zugeordnet. Dies ist technisch einfacher umsetzbar, weil erstens auch Kabelverbindungen möglich sind und zweitens keine potentiellen Unwuchten auszugleichen sind. Die Zuordnung kann optional eine Anordnung des Mikrosystems benachbart zum Gleitring und/oder an und/oder in dem Gleitring sowie optional benachbart zum Gegenring und/oder an und/oder in dem Gegenring sein.

In einer speziellen Variante ist eine Messstelle des Temperatursensors ein Bereich der Gleitringdichtung. Damit wird eine unmittelbare Temperaturmessung an der Gleitringdichtung vorgenommen und Temperaturänderungen werden ohne größere Verzögerung schnell erkannt.

Bei einer weiteren Ausgestaltungsoption weist das Mikrosystem einen Drucksensor auf und der digitale Messwert ist ein auf die Gleitringdichtung wirkender Druckwert. Die Bestimmung eines Druckes kann insbesondere bei einem Einsatz der Gleitringdichtung in Pumpen besonders frühzeitig auf eine drohende Überhitzung der Gleitringdichtung hindeuten. Mit sich ändernden Drücken geht nämlich oftmals ein sich änderndes Schmierverhalten der Gleitringdichtung einher. Außerdem führen Druckschwankungen unmittelbar zu Temperaturänderungen des Pumpmediums, die sich wiederum auf die Gleitringdichtungstemperatur auswirken.

Bei einer weiteren Ausgestaltungsoption weist das Mikrosystem einen Feuchtigkeitssensor auf und der digitale Messwert ist ein im Bereich der Gleitringdichtung vorherrschender Feuchtigkeitswert. Das ermöglicht es beispielsweise eine drohende Überhitzung bereits im Voraus zu antizipieren, die durch eine mangelnde Schmierung auftreten könnte. Ein geringer Feuchtigkeitswert ist ein Indikator für mangelnde Schmierung. Durch die Nähe der Gleitringdichtung zum maßgeblichen Dichtspalt lässt sich auch eine Leckage basierend auf einem Feuchtigkeitswert sehr frühzeitig feststellen. Hierzu ist der Feuchtigkeitssensor vorzugsweise in einem Bereich zwischen dem Gleitring und dem Gegenring angeordnet. Der Feuchtigkeitswert lässt also Rückschlüsse auf den Zustand der Gleitringdichtung zu. Ein hoher Feuchtigkeitswert in diesem Spaltbereich kann nämlich ein Indikator für fortgeschrittenen Verschleiß der Gleitringdichtung sein.

Soweit das Mikrosystem mehr als einen Sensor aus der Gruppe Temperatursensor, Drucksensor und Feuchtigkeitssensor aufweist, umfasst der ausgegebene digitale Messwert digitale Einzelwerte für den Temperaturwert, den Druckwert und/oder den Feuchtigkeitswert.

Weiterhin weist das Mikrosystem optional eine kabelgebundene und/oder eine drahtlose Datenschnittstelle, zum Beispiel Bluetooth, zur Ausgabe des digitalen Messwerts auf. Damit lassen sich die Messwerte an einen externen Empfänger übertragen. Die optionale drahtlose Datenschnittstelle teilt sich vorzugsweise die gleiche Platine mit etwaigen Sensoren des Mikrosystems.

Gemäß einer besonderen Ausführungsform ist das Mikrosystem in der Gleitringdichtung gekapselt angeordnet. Damit ist dies vor äußeren Einflüssen geschützt und ein zuverlässiger Einsatz auch in aggressiven Umgebungen möglich.

Alternativ ist das Mikrosystem in einer Vertiefung oder Ausnehmung im stationären Gegenring der Gleitringdichtung angeordnet, beispielsweise in einer Nut, so zum Beispiel in einer eingeschliffenen Nut. Hier kann das Mikrosystem eingeklebt oder eingerastet festgelegt sein. Bevorzugt ist das Mikrosystem eingelassen relativ zu einer Fläche des Gegenrings angeordnet. Hierdurch eignet sich das System auch zur Nachrüstung, weil kein zusätzlicher Bauraum notwendig ist.

Besondere Vorteile ergeben sich, wenn das Mikrosystem einen Stromerzeuger aufweist. Hierdurch wird eine Voraussetzung für einen autarken Betrieb geschaffen.

In einer speziellen Ausgestaltung ist der Stromerzeuger ein auf Induktion basierender elektrischer Generator, wobei die Induktion vorzugsweise durch Relativrotation zwischen einem Gleitring und einem Gegenring der Gleitringdichtung, alternativ zwischen rotierender Welle und stationärem Gegenring, bewirkt ist. Damit lässt sich Strom erzeugen, ohne dass externe Stromquellen notwendig wären.

Fernerhin besteht die Option, das Mikrosystem einen Energiespeicher aufweisen kann, vorzugsweise einen Akkumulator. Hierdurch kann zumindest kurzzeitig auch bei fehlender Rotation der Gleitringdichtung ein digitaler Messwert ausgegeben werden.

In einer anderen Variante ist vorgesehen, dass das Mikrosystem einen kabelgebundenen Stromanschluss aufweist. Damit lässt sich ein besonders preiswertes und kompaktes Mikrosystem bereitstellen.

Optional kann vorgesehen sein, dass das Mikrosystem mit einer Ansteuerung eines Antriebsmotors der Pumpenwelle interagiert, insbesondere um die Drehzahl des Antriebsmotors zu steuern bzw. zu regeln, bspw. auf eine maximal zulässige Temperatur an einem Messpunkt an der Gleitringdichtung. Die Pumpe kann hierdurch unter vermindertem Förderstrom, die Förderaufgabe fortführen, ohne dass die Gleitringdichtung beschädigt wird. Die Ansteuerung kann am oder im Pumpengehäuse angeordnet sein. Alternativ kann die Ansteuerung jedoch auch beabstandet vom Pumpengehäuse angeordnet sein, beispielsweise eine zentrale oder übergeordnete Ansteuerung.

Gemäß einer besonderen Ausführungsform ist das Mikrosystem mit einem Frequenzumrichter eines Antriebsmotors der Pumpenwelle verbunden. Hierdurch ist eine direkte Ansteuerung des Antriebsmotors und dessen Drehzahl möglich.

Fernerhin betrifft die Erfindung ein Verfahren zum Betrieb einer Pumpenvorrichtung wie sie vor- und nachstehend beschrieben ist, bei dem die Drehzahl eines Antriebsmotors der Pumpenwelle basierend auf dem digitalen Messwert des Mikrosystems angepasst wird, insbesondere automatisch. Hierdurch lässt sich die Gleitringdichtung in unkritischen Betriebszuständen halten, sodass diese eine lange Lebensdauer hat.

Gemäß einer Verfahrensoption ist der digitale Messwert ein Temperaturwert und die Drehzahl des Antriebsmotors wird bei Überschreitung einer Grenztemperatur heruntergeregelt, wobei vorzugsweise auf die Grenztemperatur geregelt wird. Durch Reduktion der Drehzahl entsteht weniger Wärme an der Gleitringdichtung durch Reibung. Eine Schädigung der Dichtspaltflächen sowie von Elastomerelementen der Gleitringdichtung lässt sich somit vermeiden. Indem man die Drehzahl lediglich reduziert, kann der Pumpprozess fortgesetzt werden. Dies schützt die Pumpe vor verschleißenden Neustarts. Außerdem sind Betriebszustände vermeidbar, bei denen jeder Neustart der Pumpe mit Normaldrehzahl unmittelbar erneut zu einer Erreichung der Grenztemperatur führen würde.

Gemäß einem weiteren Verfahren zum Betrieb einer Pumpenvorrichtung wie sie vor- und nachstehend beschrieben ist, ist vorgesehen, dass ein Entlüftungsventil basierend auf dem digitalen Messwert des Mikrosystems angesteuert wird, insbesondere automatisch, um einen Förderraum der Pumpenvorrichtung zu entlüften. Hierdurch lässt sich die Gleitringdichtung in unkritischen Betriebszuständen halten, sodass diese eine lange Lebensdauer hat. Sowohl eine hoher Temperaturwert als auch ein niedriger Feuchtigkeitswert können Indikatoren für Luft im Förderraum sein.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Teilschnitt durch eine Pumpenvorrichtung mit einer Gleitringdichtungsvorrichtung;
- Fig. 2: eine Vergrößerung eines Ausschnitts der Pumpenvorrichtung nach Fig. 1; und
- Fig. 3: einen Gegenring einer Gleitringdichtung mit einem Mikrosystem.

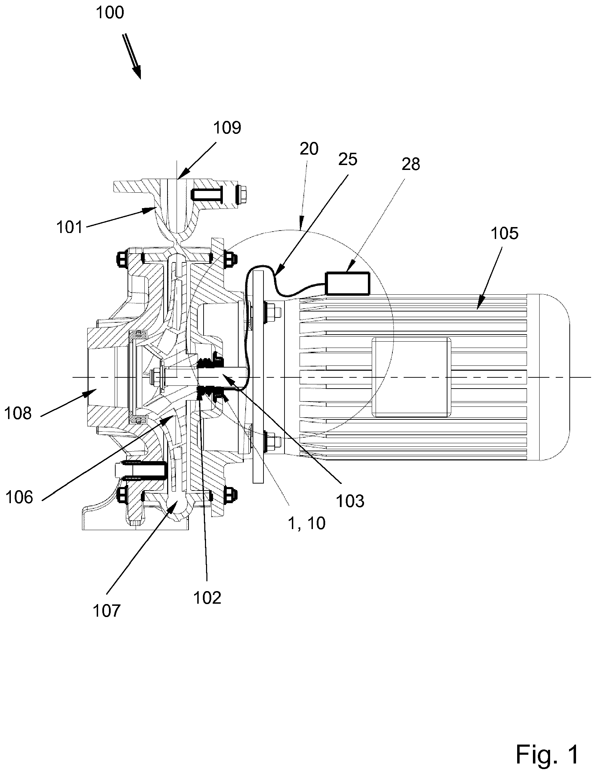

**Fig. 1** zeigt eine Pumpenvorrichtung 100 mit einem Pumpengehäuse 101, in dem ein Wellendurchgang 102 ausgebildet ist. Eine Pumpenwelle 103 ragt durch den Wellendurchgang 102 und ist hier drehbar gelagert. Die Pumpenwelle 103 ist auf einer Seite des Wellendurchgangs 102 mit einem Antriebsmotor 105 verbunden, mit der die Pumpenwelle 103 drehbar antreibbar ist. Auf der anderen Seite des Wellendurchgangs 102 ist die Pumpenwelle 103 drehfest mit einem Pumpenrad 106 verbunden, welches drehbar in einer Förderkammer 107 des Pumpengehäuse 101 angeordnet ist. Das Pumpenrad 106 fördert in Abhängigkeit seiner Umdrehungen ein Fluid zwischen zwei Öffnungen 108, 109, nämlich von einem saugseitigen Einlass (erste Öffnung 108) und zu einem druckseitigen Auslass (zweite Öffnung 109), die jeweils eine Strömungsverbindung ausbilden, die durch das Pumpengehäuse 101 in die Förderkammer 107 mündet. Vorliegend kann das Pumpenrad 106 also insbesondere ein Fluid von dem saugseitigen Einlass (erste Öffnung 108) zu dem druckseitigen Auslass (zweite Öffnung 109) fördern. Die Umdrehungsgeschwindigkeit des Pumpenrads 106 hängt von dem Antriebsmotor 105 ab, der mittels eines Frequenzumrichters hinsichtlich seiner Drehzahl regelbar ist.

Eine solche Pumpenvorrichtung 100 kann nunmehr jeweils optional mit den einzeln beschriebenen Varianten der Gleitringdichtungsvorrichtung ausgestattet werden. Nachfolgend wird eine mögliche Variante näher beschrieben.

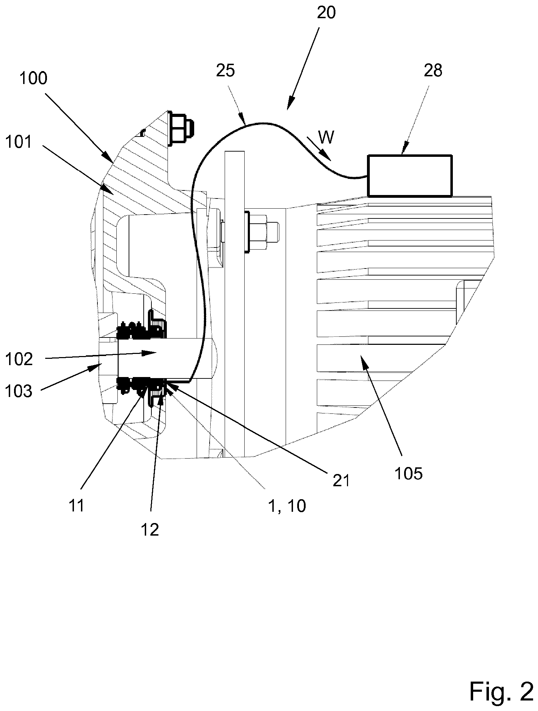

Die Pumpenvorrichtung 100 gemäß Fig. 1 verfügt außerdem über eine Gleitringdichtungsvorrichtung 1, die wiederum eine Gleitringdichtung 10 aufweist, die im Wellendurchgang 102 angeordnet ist. Die Gleitringdichtung 10 dichtet die rotierbare Pumpenwelle 103 gegenüber dem Pumpengehäuse 101 ab. Hierzu sitzt die Gleitringdichtung 10 auf der Pumpenwelle 103. Diese spezielle Anordnung der Gleitringdichtung 10 kann wiederum die nachfolgend beschriebenen optionalen Merkmale aufweisen. Solche optionalen Merkmale sind insbesondere auch dem vergrößerten Ausschnitt gemäß Fig. 2 zu entnehmen.

Wie man vor allem in **Fig. 2** erkennt, verfügt die Gleitringdichtungsvorrichtung 1 über eine Trockenlaufschutzeinrichtung 20 mit einem Mikrosystem 21, das über eine Datenschnittstelle 25, insbesondere eine Kabelleitung, einen digitalen Messwert W an eine Auswerteeinheit 28 ausgibt. Das Mikrosystem 2 kann hierzu benachbart zur Gleitringdichtung 10 und/oder an und/oder in der Gleitringdichtung 10 angeordnet sein.

Das Mikrosystem 21 ist gemäß der in Fig. 2 dargestellten optionalen Variante mittelbar über die beabstandet angeordnete Auswerteeinheit 28 mit dem Frequenzumrichter des Antriebsmotors 105 der Pumpenwelle 103 verbunden (alternativ sind auch Verbindungen mit anderen Steuerungs- bzw. Überwachungseinrichtungen möglich). Hierdurch wird ermöglicht, die Drehzahl des Antriebsmotors 105 der Pumpenwelle 103 regeltechnisch mit dem digitalen Messwert W des Mikrosystems 21 korrelieren zu lassen.

Die vorliegend eingesetzte optionale Kabelleitung, welche die Datenschnittstelle 25 beinhaltet, bildet für das Mikrosystem 21 zudem einen kabelgebundenen Stromanschluss aus.

Das Mikrosystem 21 ist vorliegend an einem stationären Gegenring 12 der Gleitringdichtung 10 angeordnet, der mit einem drehfest auf der rotierbaren Pumpenwelle 103 montierten Gleitring 11 korrespondiert.

Insbesondere bei kabellosen Datenschnittstellen 25 kommt jedoch optional auch eine Anordnung des Mikrosystems 21 am Gleitring 11 in Betracht.

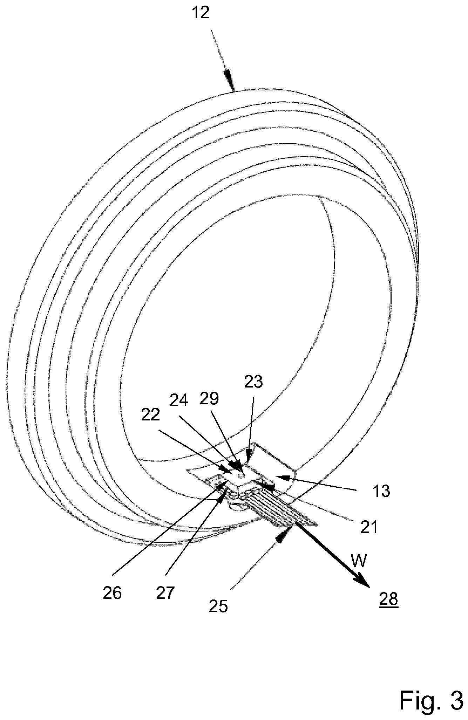

Eine mögliche Ausgestaltung des Gegenrings 12 mit dem Mikrosystem 21 ist Fig. 3 zu entnehmen. Hier sieht man, dass das Mikrosystem 21 in einer Vertiefung 13 im Gegenring 12 angeordnet ist. Es steht insbesondere nicht aus der Vertiefung 13 hervor. Das Mikrosystem 21 verfügt insbesondere über einen MEMS-Chip 26 auf einer Platine 27. In diesem MEMS-Chip 26 des Mikrosystems 21 sind zusammen oder auch einzeln integriert:
- ein Temperatursensor 22, dessen digitaler Messwert W ein Temperaturwert ist;
- ein Drucksensor 24, dessen digitaler Messwert W ein auf die Gleitringdichtung 10 wirkender Druckwert ist;
- ein Feuchtigkeitssensor 28, dessen digitaler Messwert W ein im Bereich der Gleitringdichtung 10 vorherrschender Feuchtigkeitswert ist.

Der MEMS-Chip 26 bildet also jeweils eine Messstelle 23 für den Temperatursensor 22, den Drucksensor 24 und den Feuchtigkeitssensor 28 in einem Bereich der Gleitringdichtung 10 aus. Der Messwert W der unterschiedlichen Sensoren wird jeweils über die Datenschnittstelle 25 an die separat angeordnete Auswerteeinheit 28 (siehe auch Fig. 1 und 2) ausgegeben.

Mit einer solchen Anordnung wird ein Verfahren ermöglicht, bei dem die Drehzahl des Antriebsmotors 105 der Pumpenwelle 103 basierend auf dem digitalen Messwert W des Mikrosystems 21 angepasst wird. Dieses Verfahren kann beispielsweise umfassen:
- eine Reduktion der Drehzahl des Antriebsmotors 105 bei Überschreitung einer Grenztemperatur durch den Temperaturwert;
- eine Erhöhung der Drehzahl des Antriebsmotors 105 bei Unterschreitung der Grenztemperatur durch den Temperaturwert;
- eine Reduktion oder Erhöhung der Drehzahl in Abhängigkeit des gemessenen Feuchtigkeitswerts; und
- eine Reduktion oder Erhöhung der Drehzahl in Abhängigkeit des gemessenen Druckwerts.

Die Erfindung ist nicht auf eine der vorbeschriebenen Ausführungsformen beschränkt, sondern in vielfältiger Weise abwandelbar.

So kann das Mikrosystem 21 optional anstatt mit der kabelgebundenen Datenschnittstelle 25 auch mit einer drahtlosen Datenschnittstelle 25 zur Ausgabe des digitalen Messwerts W ausgestattet sein.

Ebenso besteht die Option, dass die Stromversorgung des Mikrosystems 21 kabellos erfolgt. Das eröffnet die Option, das Mikrosystem 21 vollständig gekapselt in der Gleitringdichtung 10, insbesondere dem Gegenring 12 oder dem Gleitring 11, anzuordnen.

Für eine kabellose Stromversorgung sollte das Mikrosystem 21 einen Stromerzeuger aufweisen, insbesondere ebenfalls in Mikrobauweise. Beispielsweise kann ein solcher Stromerzeuger ein auf Induktion basierender elektrischer Generator sein. Die Induktion ist vorzugsweise durch die Relativrotation zwischen dem Gleitring 11 und dem Gegenring 12 der Gleitringdichtung 10 bewirkt, weil hierdurch die Gleitringdichtung 10 als Baueinheit alle funktional notwendigen Ausgestaltungsmerkmale aufweist. Alternativ kann die Induktion auch zwischen der rotierenden Pumpenwelle103 und dem stationären Gegenring 12 bewirkt sein.

Damit auch bei stillstehender Pumpenwelle 103 ein Messwert W verfügbar ist, bietet es sich an, dass Mikrosystem 21 mit einem Energiespeicher auszugestalten, insbesondere ebenfalls in Mikrobauweise, zum Beispiel ein Akkumulator oder ein elektrischer Kondensator. In der optionalen Kombination mit dem Stromerzeuger kann dieser Energiespeicher regelmäßig geladen werden.

**Bezugszeichenliste**

| | | | |
|---|---|---|---|
| 1 | Gleitringdichtungsvorrichtung | 28 | Auswerteeinheit |
| | | 29 | Feuchtigkeitssensor |
| 10 | Gleitringdichtung | | |
| 11 | Gleitring | 100 | Pumpenvorrichtung |
| 12 | Gegenring | 101 | Pumpengehäuse |
| 13 | Vertiefung | 102 | Wellendurchgang |
| | | 103 | Pumpenwelle |
| 20 | Trockenlaufschutzeinrichtung | 105 | Antriebsmotor |
| 21 | Mikrosystem | 106 | Pumpenrad |
| 22 | Temperatursensor | 107 | Förderkammer |
| 23 | Messstelle | 108 | Öffnung bzw. saugseitiger Einlass |
| 24 | Drucksensor | 109 | Öffnung bzw. druckseitiger Auslass |
| 25 | Datenschnittstelle | W | digitaler Messwert |
| 26 | MEMS-Chip | | |
| 27 | Platine | | |

## Patentansprüche

1. **Pumpenvorrichtung** (100) mit
- einem Pumpengehäuse (101), in dem ein Wellendurchgang (102) ausgebildet ist,
- mit einer Pumpenwelle (103), die drehbar in den Wellendurchgang (102) ragt, und
- mit einer Gleitringdichtungsvorrichtung (1) mit einer Gleitringdichtung (10), die eine Trockenlaufschutzeinrichtung (20) aufweist, wobei die Trockenlaufschutzeinrichtung (20) wenigstens ein Mikrosystem (21) aufweist, das einen digitalen Messwert (W) ausgibt, wobei das Mikrosystem (2) benachbart zur Gleitringdichtung (10) und/oder an und/oder in der Gleitringdichtung (10) angeordnet ist, und wobei die Gleitringdichtung (10) im Wellendurchgang (102) angeordnet ist und auf der Pumpenwelle (103) sitzt, wobei die Drehzahl eines Antriebsmotors (105) der Pumpenwelle (103) mit dem digitalen Messwert (W) des Mikrosystems (21) korreliert.

2. Pumpenvorrichtung (100) nach Anspruch 1, **dadurch gekennzeichnet, dass** das Mikrosystem (21) eine kabelgebundene und/oder eine drahtlose Datenschnittstelle (25) zur Ausgabe des digitalen Messwerts (W) aufweist.

3. Pumpenvorrichtung (100) nach einem der Ansprüche 1 oder 2, **dadurch gekennzeichnet, dass** das Mikrosystem (21) in der Gleitringdichtung (10) gekapselt angeordnet ist.

4. Pumpenvorrichtung (100) nach einem der vorhergehenden Ansprüche, **dadurch gekennzeichnet, dass** das Mikrosystem (21) einen Stromerzeuger aufweist.

5. Pumpenvorrichtung (100) nach einem der vorhergehenden Ansprüche, **dadurch gekennzeichnet, dass** das Mikrosystem (21) mit einem Frequenzumrichter eines Antriebsmotors (105) der Pumpenwelle (103) verbunden ist.

6. Pumpenvorrichtung (100) nach einem der vorhergehenden Ansprüche, **dadurch gekennzeichnet, dass** das Mikrosystem (21) einen kabelgebundenen Stromanschluss aufweist.

7. Pumpenvorrichtung (100) nach einem der vorhergehenden Ansprüche, **dadurch gekennzeichnet, dass** das Mikrosystem (21) einen MEMS-Chip (26) aufweist.

8. Pumpenvorrichtung (100) nach einem der vorhergehenden Ansprüche, **dadurch gekennzeichnet, dass** das Mikrosystem (21) einen Temperatursensor (22) aufweist und der digitale Messwert (W) ein Temperaturwert ist.

9. Pumpenvorrichtung (100) nach einem der vorhergehenden Ansprüche, **dadurch gekennzeichnet, dass** das Mikrosystem (21) einen Feuchtigkeitssensor (29) aufweist und der digitale Messwert (W) ein im Bereich der Gleitringdichtung (10) vorherrschender Feuchtigkeitswert ist.

10. Pumpenvorrichtung (100) nach einem der vorhergehenden Ansprüche, **dadurch gekennzeichnet, dass** das Mikrosystem (21) einen Drucksensor (24) aufweist und der digitale Messwert (W) ein auf die Gleitringdichtung (10) wirkender Druckwert ist.

11. Pumpenvorrichtung (100) nach einem der vorhergehenden Ansprüche, **dadurch gekennzeichnet, dass** das Mikrosystem (21) einen Energiespeicher aufweist.

12. **Verfahren** zum Betrieb einer Pumpenvorrichtung (100) nach einem der vorhergehenden Ansprüche , bei dem die Drehzahl des Antriebsmotors (105) der Pumpenwelle (103) basierend auf dem digitalen Messwert (W) des Mikrosystems (21) angepasst wird.

13. Verfahren nach Anspruch 12, wobei der digitale Messwert (W) ein Temperaturwert ist und die Drehzahl des Antriebsmotors (105) bei Überschreitung einer Grenztemperatur heruntergeregelt wird.

## Claims

1. **Pump device** (100) having
- a pump housing (101) in which is formed a shaft passage (102),
- having a pump shaft (103) which protrudes into the shaft passage (102) such as to be rotatable and
- having a slide ring seal device (1) having a slide ring seal (10) which has a dry-running protection device (20), wherein the dry-running protection device (20) has at least one microsystem (21) which outputs a digital measurement value (W), wherein the microsystem (2) is arranged adjacent to the slide ring seal (10) and/or on and/or in the slide ring seal (10), and wherein the slide ring seal (10) is arranged in the shaft passage (102) and rests on the pump shaft (103), wherein the rotational speed of a drive motor (105) of the pump shaft (103) correlates with the digital measurement value (W) of the microsystem (21).

2. Pump device (100) according to claim 1, **characterised in that** the microsystem (21) has a wired and/or a wireless data interface (25) for outputting the digital measurement value (W).

3. Pump device (100) according to any of claims 1 or 2, **characterised in that** the microsystem (21) is arranged encapsulated in the slide ring seal (10).

4. Pump device (100) according to any of the preceding claims, **characterised in that** the microsystem (21) has an electricity generator.

5. Pump device (100) according to any of the preceding claims, **characterised in that** the microsystem (21) is connected to a frequency converter of a drive motor (105) of the pump shaft (103).

6. Pump device (100) according to any of the preceding claims, **characterised in that** the microsystem (21) has a wired electricity connection.

7. Pump device (100) according to any of the preceding claims, **characterised in that** the microsystem (21) has a MEMS chip (26).

8. Pump device (100) according to any of the preceding claims, **characterised in that** the microsystem (21) has a temperature sensor (22) and the digital measurement value (W) is a temperature value.

9. Pump device (100) according to any of the preceding claims, **characterised in that** the microsystem (21) has a humidity sensor (29) and the digital measurement value (W) is a humidity value which prevails in the region of the slide ring seal (10).

10. Pump device (100) according to any of the preceding claims, **characterised in that** the microsystem (21) has a pressure sensor (24) and the digital measurement value (W) is a pressure value acting on the slide ring seal (10).

11. Pump device (100) according to any of the preceding claims, **characterised in that** the microsystem (21) has an energy store.

12. **Method** for operating a pump device (100) according to any of the preceding claims, in which the rotational speed of the drive motor (105) of the pump shaft (103) is adapted based on the digital measurement value (W) of the microsystem (21).

13. Method according to claim 12, wherein the digital measurement value (W) is a temperature value and the rotational speed of the drive motor (105) is regulated downwards when a limit temperature is exceeded.

## Revendications

1. **Dispositif de pompe** (100) avec
- un corps de pompe (101) dans lequel un passage d'arbre (102) est réalisé,
- avec un arbre de pompe (103) qui fait saillie de manière rotative dans le passage d'arbre (102), et
- avec un dispositif de garniture mécanique (1) avec une garniture mécanique (10) qui présente un dispositif de protection contre la marche à vide (20), dans lequel le dispositif de protection contre la marche à vide (20) présente au moins un microsystème (21) qui émet une valeur de mesure numérique (W), dans lequel le microsystème (2) est disposé à proximité de la garniture mécanique (10) et/ou sur et/ou dans la garniture mécanique (10), et dans lequel la garniture mécanique (10) est disposée dans le passage d'arbre (102) et repose sur l'arbre de pompe (103), dans lequel la vitesse de rotation d'un moteur d'entraînement (105) de l'arbre de pompe (103) est en corrélation avec la valeur de mesure numérique (W) du microsystème (21).

2. Dispositif de pompe (100) selon la revendication 1, **caractérisé en ce que** le microsystème (21) présente une interface de données (25) filaire et/ou sans fil pour l'émission de la valeur de mesure numérique (W).

3. Dispositif de pompe (100) selon l'une quelconque des revendications 1 ou 2, **caractérisé en ce que** le microsystème (21) est disposé de manière encapsulée dans la garniture mécanique (10).

4. Dispositif de pompe (100) selon l'une quelconque des revendications précédentes, **caractérisé en ce que** le microsystème (21) présente un générateur de courant.

5. Dispositif de pompe (100) selon l'une quelconque des revendications précédentes, **caractérisé en ce que** le microsystème (21) est connecté à un convertisseur de fréquences d'un moteur d'entraînement (105) de l'arbre de pompe (103).

6. Dispositif de pompe (100) selon l'une quelconque des revendications précédentes, **caractérisé en ce que** le microsystème (21) présente une connexion électrique filaire.

7. Dispositif de pompe (100) selon l'une quelconque des revendications précédentes, **caractérisé en ce que** le microsystème (21) présente une puce MEMS (26).

8. Dispositif de pompe (100) selon l'une quelconque des revendications précédentes, **caractérisé en ce que** le microsystème (21) présente un capteur de température (22) et la valeur de mesure numérique (W) est une valeur de température.

9. Dispositif de pompe (100) selon l'une quelconque des revendications précédentes, **caractérisé en ce que** le microsystème (21) présente un capteur d'humidité (29) et la valeur de mesure numérique (W) est une valeur d'humidité prédominante au niveau de la garniture mécanique (10).

10. Dispositif de pompe (100) selon l'une quelconque des revendications précédentes, **caractérisé en ce que** le microsystème (21) présente un capteur de pression (24) et la valeur de mesure numérique (W) est une valeur de pression agissant sur la garniture mécanique (10).

11. Dispositif de pompe (100) selon l'une quelconque des revendications précédentes, **caractérisé en ce que** le microsystème (21) présente un accumulateur d'énergie.

12. **Procédé** de fonctionnement d'un dispositif de pompe (100) selon l'une quelconque des revendications précédentes, dans lequel la vitesse de rotation du moteur d'entraînement (105) de l'arbre de pompe (103) est adaptée sur la base de la valeur de mesure numérique (W) du microsystème (21).

13. Procédé selon la revendication 12, dans lequel la valeur de mesure numérique (W) est une valeur de température et la vitesse de rotation du moteur d'entraînement (105) est réduite en cas de dépassement d'une température limite.
